# EUROPEAN PATENT APPLICATION

(11) **EP 4 841 807 A1**
(43) Date of publication of application: **18.11.2026**
(21) Application number: 25854628.2
(22) Date of filing: 08.08.2025
(51) Int. Cl.: H01M 50/538, H01M 50/528, H01M 10/04, H01M 50/249

(54) **BATTERY CELL, BATTERY PACK, AND VEHICLE COMPRISING SAME**

(30) Priority: 16.08.2024 KR 20240109954; 05.08.2025 KR 20250107706
(71) Applicant: LG Energy Solution, Ltd., Seoul 07335 (KR)
(72) Inventor: HWANG, Dong-Sung, Daejeon 34122 (KR); KO, Kwang-Hun, Daejeon 34122 (KR); KIM, Geon-Guk, Daejeon 34122 (KR); KIM, Do-Gyun, Daejeon 34122 (KR); CHOI, Hyeon-Woo, Daejeon 34122 (KR)
(74) Representative: Goddar, Heinz J.
(86) International application number: PCT/KR2025/012068
(87) International publication number: WO 2026/038821

(57) **Abstract**

A battery cell according to the present disclosure may include: an electrode assembly configured by winding a first electrode and a second electrode with a separator interposed therebetween around a central axis of a winding center hole; a cell housing configured to accommodate the electrode assembly therein and having an opening formed on one side; a can lid configured to cover the opening; and a current collector including a first coupling portion coupled to the electrode assembly and a second coupling portion coupled to the can lid, wherein the second coupling portion is spaced apart from the electrode assembly.

## Description

### TECHNICAL FIELD

The present disclosure relates to a battery cell and battery pack, and a vehicle including the same, and more specifically, to a battery cell and battery pack capable of minimizing damage to an electrode assembly, and a vehicle including the same.

This application is based on and claims priority from Korean Patent Application No. 10-2024-0109954, filed on August 16, 2024, and Korean Patent Application No. 10-2025-0107706, filed on August 05, 2025, with the Korean Intellectual Property Office, the disclosure of which is incorporated herein in its entirety by reference.

### BACKGROUND ART

Recently, the demand for portable electronic products such as laptop PCs, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway.

Currently commercialized secondary batteries include nickel-cadmium batteries, nickel-hydrogen batteries, nickel-zinc batteries, and lithium-ion secondary batteries. Among these, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into can-type secondary batteries in which the electrode assembly is accommodated in a metal can and pouch-type secondary batteries in which the electrode assembly is accommodated in a pouch of an aluminum laminate sheet. In addition, can-type secondary batteries may be further classified into cylindrical batteries and prismatic batteries depending on the shape of the metal can. In these lithium-ion secondary batteries, a plurality of battery cells are assembled to be stacked or overlap into a dense structure, and then electrically connected, thereby configuring battery modules or battery packs used to provide high voltage and high current.

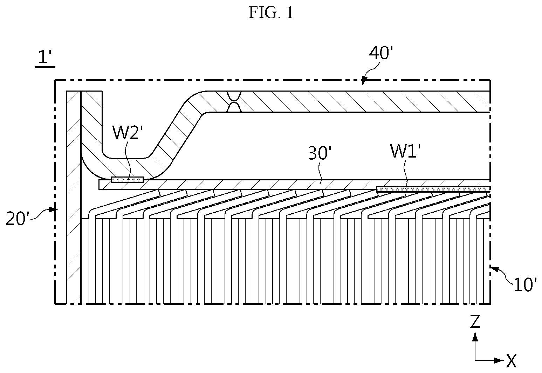

FIG. 1 is a cross-sectional view illustrating a portion of a conventional battery cell. Referring to FIG. 1, a conventional battery cell 1' may include an electrode assembly 10', a cell housing 20', a current collector 30', and a can lid 40'. In the conventional battery cell 1', the uncoated portion of the electrode assembly 10' and the current collector 30' are welded at the first weld W1', and the can lid 40' and the current collector 30' are welded at the second weld W2'.

However, in the conventional battery cell 1', the portion of the current collector 30' corresponding to the second weld W2' and the portion of the current collector 30' corresponding to the first weld W1' are positioned at the same height. That is, in the conventional battery cell 1', the portion of the current collector 30' corresponding to the second weld W2' is in contact with the electrode assembly 10' or is positioned very close to it. As a result, when welding is performed at the second weld W2', the high-temperature heat generated due to welding may be transferred to the electrode assembly 10' via the current collector 30', so that the electrode assembly 10' is likely to be damaged. In particular, the separator of the electrode assembly 10' is highly susceptible to damage.

In addition, in the conventional battery cell 1', the can lid 40', the current collector 30', and the electrode assembly 10' are in contact with or are positioned very close to each other. This may lead to accumulated tolerances between them, thereby increasing the possibility of welding defects when welding the can lid 40' and the cell housing 20'.

Therefore, there is an urgent need to develop a battery cell 1' capable of minimizing damage to the electrode assembly 10' and welding defects.

### DISCLOSURE

### Technical Problem

The present disclosure is designed to solve the problems of the related art, and therefore the present disclosure is directed to providing a battery cell and battery pack capable of minimizing damage to the electrode assembly during assembly, and a vehicle including the same.

The present disclosure is also directed to providing a battery cell and battery pack capable of minimizing damage to the electrode assembly during the welding process between the can lid and the current collector, and a vehicle including the same.

The present disclosure is also directed to providing a battery cell and battery pack in which the current collector stably supports the can lid, and a vehicle including the same.

The present disclosure is also directed to providing a battery cell and battery pack capable of effectively compensating for tolerances among respective components, thereby improving quality, and a vehicle including the same.

The present disclosure is also directed to providing a battery cell and battery pack with improved productivity, and a vehicle including the same.

The present disclosure is also directed to providing a battery cell and battery pack with improved assembly efficiency, and a vehicle including the same.

The present disclosure is also directed to providing a battery cell and battery pack having improved electrical stability due to enhanced current paths, and a vehicle including the same.

The present disclosure is also directed to providing a battery cell and battery pack with improved energy density, and a vehicle including the same.

The present disclosure is also directed to providing a battery cell and battery pack capable of minimizing the risk of welding defects between the can lid and the cell housing, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly configured by winding a first electrode and a second electrode with a separator interposed therebetween around a central axis of a winding center hole; a cell housing configured to accommodate the electrode assembly therein and having an opening formed on one side; a can lid configured to cover the opening; and a current collector including a first coupling portion coupled to the electrode assembly and a second coupling portion coupled to the can lid, wherein the second coupling portion is spaced apart from the electrode assembly.

The second coupling portion may be welded to the can lid.

The second coupling portion may be configured to exert an elastic restoring force on the can lid when pressed by the can lid.

The can lid may be configured to be inserted into the cell housing through the opening.

The can lid may be force-fitted to the cell housing.

The second coupling portion may be manufactured by bending a portion of the current collector.

The current collector may further include: a bridge configured to connect the first coupling portion and the second coupling portion; and a first inclined portion formed to be inclined so as to connect the second coupling portion and the bridge.

An angle between the first inclined portion and the bridge may be formed as an obtuse angle.

The current collector may further include a circumferential portion formed at an edge to surround at least a portion of the first coupling portion.

The current collector may further include a second inclined portion formed to be inclined so as to connect the second coupling portion and the circumferential portion.

The second inclined portion and the circumferential portion may be configured to be entirely continuous along a circumferential direction.

An angle between the second inclined portion and the circumferential portion may be formed as an obtuse angle.

The current collector may be configured not to be in contact with the cell housing.

The current collector may include a plurality of second coupling portions.

The current collector may include three second coupling portions.

The can lid may be welded to the cell housing.

In another aspect of the present disclosure, there is also provided a battery pack including at least one battery cell according to the present disclosure.

In another aspect of the present disclosure, there is also provided a vehicle including at least one battery pack according to the present disclosure.

### Advantageous Effects

According to the present disclosure, it is possible to provide a battery cell and battery pack capable of minimizing damage to the electrode assembly during assembly because the second coupling portion of the current collector is spaced from the electrode assembly, and a vehicle including the same.

According to an aspect of the present disclosure, it is possible to provide a battery cell and battery pack capable of minimizing damage to the electrode assembly during the welding process between the can lid and the current collector because the second coupling portion is spaced from the electrode assembly, and a vehicle including the same.

According to an aspect of the present disclosure, it is possible to provide a battery cell and battery pack in which the current collector stably supports the can lid, and a vehicle including the same.

According to an aspect of the present disclosure, it is possible to provide a battery cell and battery pack capable of effectively compensating for tolerances among the respective components, thereby improving quality, and a vehicle including the same.

According to an aspect of the present disclosure, it is possible to provide a battery cell and battery pack with improved productivity, and a vehicle including the same.

According to an aspect of the present disclosure, it is possible to provide a battery cell and battery pack with improved assembly efficiency, and a vehicle including the same.

According to an aspect of the present disclosure, it is possible to provide a battery cell and battery pack having improved electrical stability due to enhanced current paths, and a vehicle including the same.

According to an aspect of the present disclosure, it is possible to provide a battery cell and battery pack with improved energy density, and a vehicle including the same.

According to an aspect of the present disclosure, it is possible to provide a battery cell and battery pack capable of minimizing the risk of welding defects between the can lid and the cell housing, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a side cross-sectional view illustrating a portion of a conventional battery cell.
FIG. 2 is an overall perspective view of a battery cell according to an embodiment of the present disclosure.
FIG. 3 is a perspective view of the battery cell in FIG. 2 when viewed in another direction.
FIG. 4 is a side cross-sectional view illustrating the overall appearance of a battery cell according to an embodiment of the present disclosure.
FIG. 5 is a perspective view of the battery cell in FIG. 2, in which a can lid is separated.
FIG. 6 is a perspective view illustrating a current collector according to an embodiment of the present disclosure.
FIG. 7 is a plan view illustrating a current collector according to an embodiment of the present disclosure.
FIG. 8 is a side cross-sectional view illustrating a portion of a battery cell according to an embodiment of the present disclosure.
FIG. 9 is a side cross-sectional view in which welds are further illustrated in FIG. 8.
FIG. 10 is an enlarged perspective view of area B in FIG. 6.
FIG. 11 is a drawing illustrating a battery pack according to an embodiment of the present disclosure.
FIG. 12 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In this specification, unless specifically stated otherwise, the X-axis and Y-axis directions may indicate left-right and front-back directions, or vice versa, and the Z-axis direction perpendicular to the X-Y plane may be an up-down direction (vertical direction).

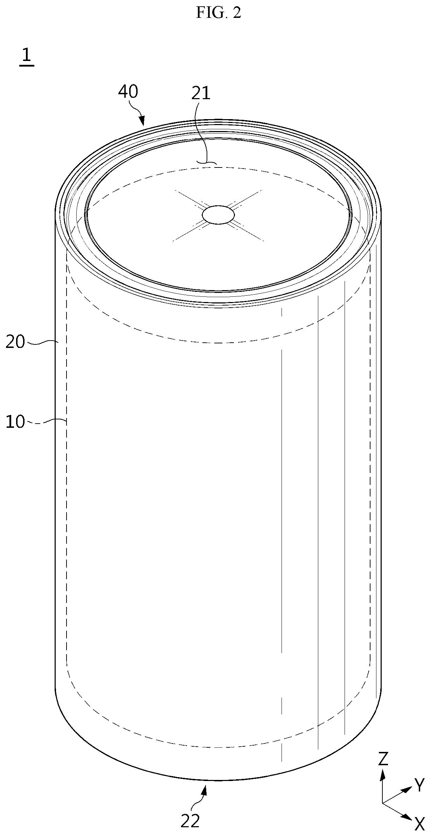

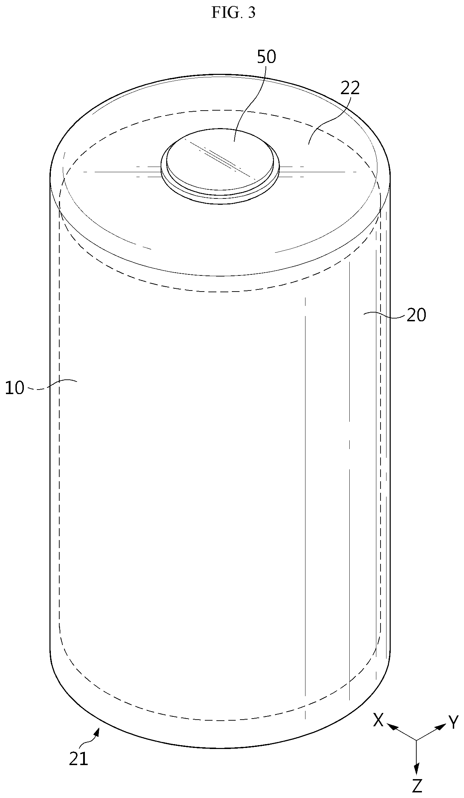

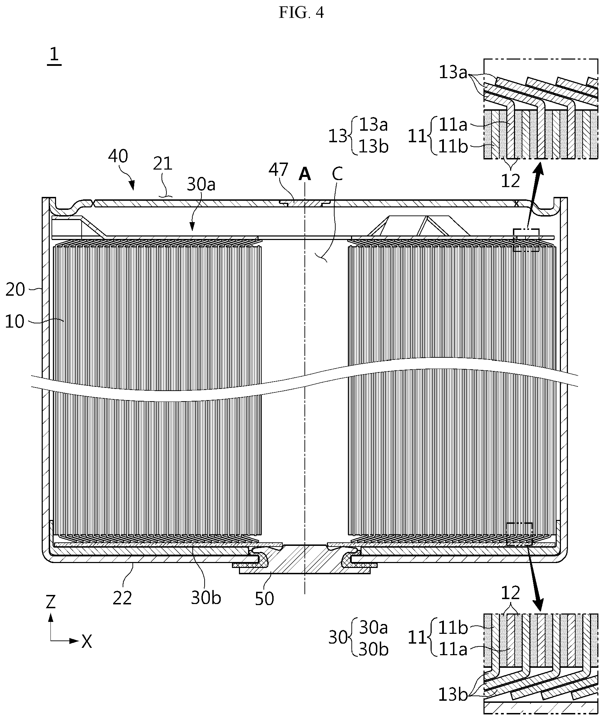

FIG. 2 is an overall perspective view of a battery cell according to an embodiment of the present disclosure, FIG. 3 is a perspective view of the battery cell in FIG. 2 when viewed in another direction, and FIG. 4 is a side cross-sectional view illustrating the overall appearance of a battery cell according to an embodiment of the present disclosure.

Referring to FIGS. 2 to 4, a battery cell 1 according to an embodiment of the present disclosure may include an electrode assembly 10, a cell housing 20, a can lid 40, and a current collector 30.

The battery cell 1 may be a secondary battery configured to be chargeable and dischargeable. The battery cell 1 may be a cylindrical battery.

The electrode assembly 10 may include electrodes 11 and a separator 12. The electrodes 11 may include electrodes 11 of different polarities. Specifically, the electrodes 11 may include a first electrode 11a and a second electrode 11b. The first electrode 11a may have a first polarity, and the second electrode 11b may have a second polarity opposite to the first polarity. For example, the first polarity may correspond to a negative electrode and the second polarity may correspond to a positive electrode. The separator 12 may be interposed between the electrodes 11 of different polarities. The separator 12 may be interposed between the first electrode 11a and the second electrode 11b. The separator 12 may be an insulator.

The electrode assembly 10 may have a jelly-roll structure. That is, the electrode assembly 10 may be manufactured by winding a laminate, formed by stacking the sheet-shaped first electrode 11a and second electrode 11b at least once with the separator 12 interposed between them, around the central axis A of the winding center hole C. Any jelly-roll structure known in the art may be applied without limitation to the present disclosure.

The electrode 11 may include a conductive metal material. For example, the electrode 11 may include either copper (Cu) or aluminum (Al). In particular, the first electrode 11a may include copper, and the second electrode 11b may include aluminum.

Each electrode 11 may include a coated portion and an uncoated portion 13. The coated portion may be a portion in which an active material layer is laminated on at least one surface of the electrode 11. For example, a negative electrode active material may be laminated on the coated portion of the first electrode 11a, and a positive electrode active material may be laminated on the coated portion of the second electrode 11b.

The uncoated portion 13 may be a portion of the electrode 11 on which no active material is applied. The electrode 11 may have a predetermined length and width, and the uncoated portion 13 may be formed on one longitudinal side of the electrode 11.

At least a portion of the uncoated portion 13 may be exposed to the outside of the separator 12. The uncoated portion 13 may be used as a tab of the electrode 11.

Among the uncoated portions 13, the uncoated portion 13 of the first electrode 11a may be referred to as a first uncoated portion 13a, and the uncoated portion 13 of the second electrode 11b may be referred to as a second uncoated portion 13b. The first uncoated portion 13a may be positioned at the top (e.g., at the +Z-direction end) of the electrode assembly 10, and the second uncoated portion 13b may be positioned at the bottom (e.g., at the -Z-direction end) of the electrode assembly 10.

The electrode 11 may include a plurality of foil tabs. A plurality of foil tabs may be provided on the uncoated portion 13. The foil tabs may be exposed to the outside of the separator 12. The plurality of foil tabs may be arranged in a row from the winding center hole C toward the outer circumference. The plurality of foil tabs may be formed by at least one notched portion formed by notching.

The electrode 11 may include an insulating coating portion. The insulating coating portion may be positioned at the boundary between the uncoated portion 13 and the coated portion. The insulating coating portion may be provided when the electrode 11 is a second electrode 11b, and may prevent the coated portions of the second electrode 11b and the first electrode 11a from contacting each other.

The cell housing 20 may be configured to accommodate the electrode assembly 10. The electrode assembly 10 may be accommodated within the cell housing 20. The cell housing 20 may have a space for accommodating the electrode assembly 10. The cell housing 20 may be provided, for example, in a hollow cylindrical shape to accommodate the electrode assembly 10. The cell housing 20 may include a conductive metal material.

The cell housing 20 may have an opening 21 formed on one side. The opening 21 may be formed on one axial side of the cell housing 20. Here, the axial direction may be understood as the central axis of the winding center hole. The electrode assembly 10 may be inserted through the opening 21 and accommodated in the cell housing 20. The opening 21 may be provided, for example, at the top of the cell housing 20.

Meanwhile, the cell housing 20 may have a closed portion 22 formed on the other side or on the opposite side of the opening 21. A terminal 50 may be disposed on the closed portion 22. Details of the closed portion 22 and terminal 50 will be described later.

The can lid 40 may cover the opening 21. The can lid 40 may be coupled to the end of the cell housing 20 on the opening 21 side. The can lid 40 may cover the electrode assembly 10.

The can lid 40 may be inserted into and attached to the opening 21. Specifically, the can lid 40 may be inserted into the opening 21 from one axial side toward the electrode assembly 10 and then coupled to the cell housing 20. The can lid 40 may be disposed on the outermost side of the cell housing 20 in the axial direction and may form part of the exterior of the battery cell 1.

The current collector 30 may be connected to the electrode assembly 10 and the can lid 40, respectively. The current collector 30 may be electrically connected to the electrode assembly 10 and the can lid 40, respectively.

The current collector 30 may include a first current collector 30a and a second current collector 30b. The first current collector 30a may be electrically connected to the first electrode 11a. The first current collector 30a may be welded to the first uncoated portion 13a. The first current collector 30a may be a negative electrode current collector 30. The second current collector 30b may be electrically connected to the second electrode 11b. The second current collector 30b may be welded to the second uncoated portion 13b. The second current collector 30b may be a positive electrode current collector 30.

The following description of the current collector 30 may be commonly applied to both the first current collector 30a and the second current collector 30b, unless otherwise specified.

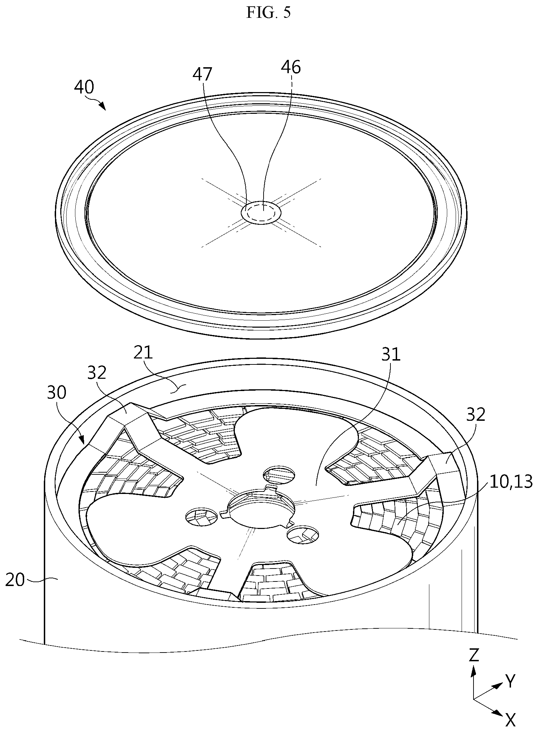

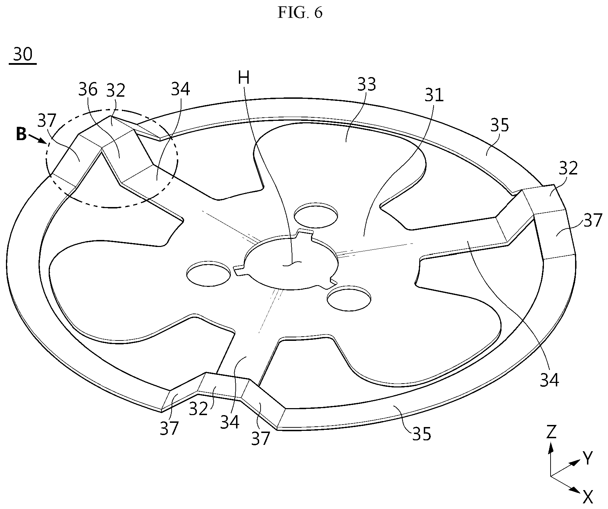

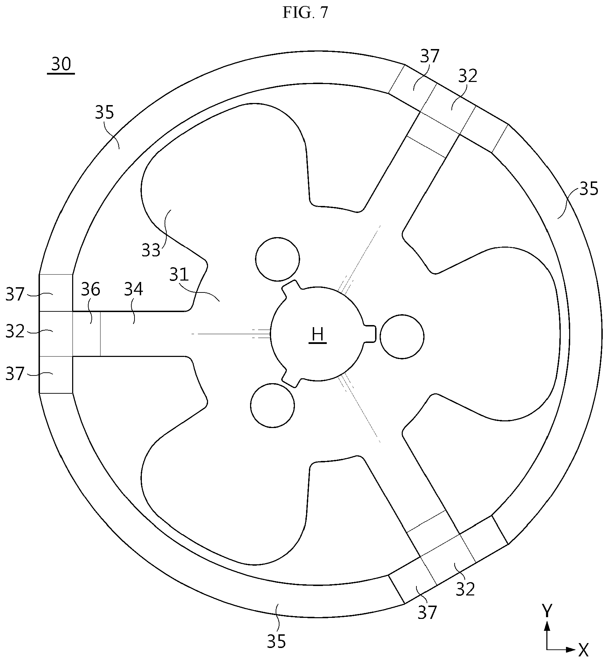

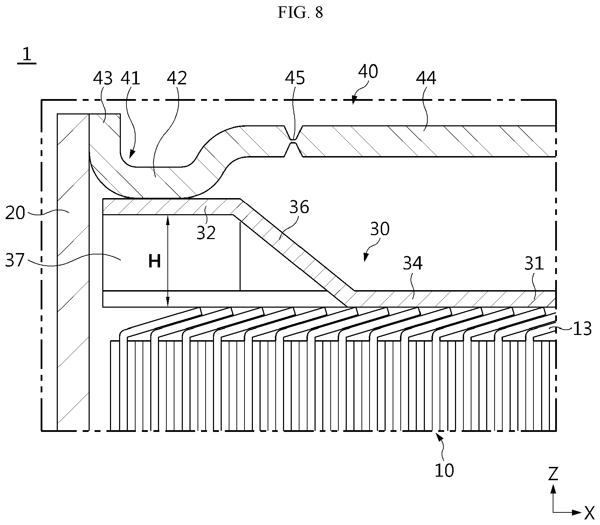

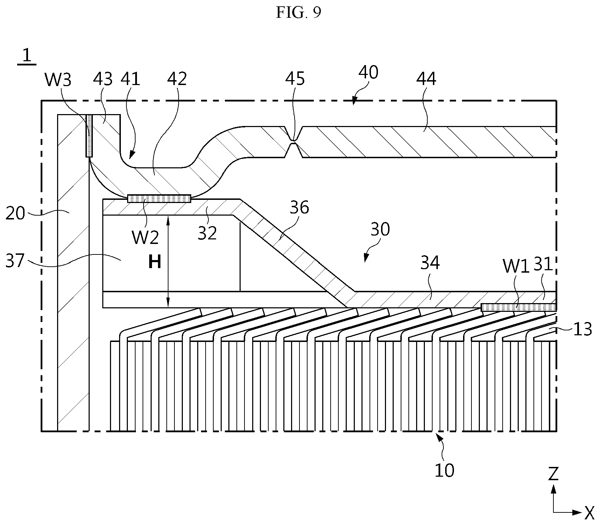

FIG. 5 is a perspective view of the battery cell in FIG. 2, in which a can lid is separated, FIG. 6 is a perspective view illustrating a current collector according to an embodiment of the present disclosure, FIG. 7 is a plan view illustrating a current collector according to an embodiment of the present disclosure, FIG. 8 is a side cross-sectional view illustrating a portion of a battery cell according to an embodiment of the present disclosure, and FIG. 9 is a side cross-sectional view in which welds are further illustrated in FIG. 8.

Hereinafter, the battery cell 1 according to an embodiment of the present disclosure will be described in detail with reference to FIGS. 5 to 9.

The current collector 30 may include a first coupling portion 31 and a second coupling portion 32.

The first coupling portion 31 may be coupled to the electrode assembly 10. The first coupling portion 31 may be electrically connected to the electrode assembly 10. The first coupling portion 31 may be coupled to the uncoated portion 13 of the electrode assembly 10. The first coupling portion 31 may be in contact with the electrode assembly 10 or the uncoated portion 13.

Meanwhile, the first coupling portion 31 may be a portion of the current collector 30 that is configured to be welded to the electrode assembly 10 or the uncoated portion 13. The first coupling portion 31 may be in surface contact with the electrode assembly 10 or the uncoated portion 13, and a first weld W1 may be formed at each surface contact portion. When the first coupling portion 31 is welded to the electrode assembly 10 or the uncoated portion 13, improved bonding properties and increased current-carrying area may be expected.

The first coupling portion 31 may include at least one extended portion 33. The extended portion 33 may be a portion extending radially outward from the first coupling portion 31. When the first coupling portion 31 includes the extended portion 33, a wider coupling area may be secured between the first coupling portion 31 and the electrode assembly 10.

The second coupling portion 32 may be a portion of the current collector 30 configured to be coupled to the can lid 40. The second coupling portion 32 may be electrically connected to the can lid 40. The second coupling portion 32 may be in contact with the can lid 40. The second coupling portion 32 may be in surface contact with the can lid 40.

For example, referring to FIG. 8, the can lid 40 may be disposed on the upper side or +Z-direction side of the second coupling portion 32, and the upper surface of the second coupling portion 32 may be in surface contact with a portion of the lower surface of the can lid 40. In this case, the portion of the outer circumferential portion 35 of the can lid 40, which is in contact with the second coupling portion 32, will be referred to as a first contact portion 42, and the upper surface of the second coupling portion 32 may be in surface contact with the first contact portion 42. When the second coupling portion 32 and the can lid 40 are in surface contact, not only may the second coupling portion 32 stably support the can lid 40, but the current-carrying area between the second coupling portion 32 and the can lid 40 may also increase, thereby improving current path and electrical stability.

The second coupling portion 32 may have a flat shape. For example, the second coupling portion 32 may have a flat shape parallel to the X-Y plane. In addition, the portion of the can lid 40 that is coupled to the second coupling portion 32 may also have a flat shape. For example, the first contact portion 42 may have a flat portion. In this case, surface contact between the second coupling portion 32 and the can lid 40 may be effectively achieved.

The second coupling portion 32 may be spaced from the electrode assembly 10 in the axial direction. The second coupling portion 32 may be spaced from the uncoated portion 13 of the electrode assembly 10. For example, the lower surface of the second coupling portion 32 may be spaced from the top of the electrode assembly 10 or the uncoated portion 13 in the +Z direction. The second coupling portion 32 may be spaced from the electrode assembly 10 or the uncoated portion 13 by a predetermined distance H.

The battery cell 1 according to the present disclosure may minimize damage to the electrode assembly 10 caused by the second coupling portion 32 because the second coupling portion 32 of the current collector 30 is spaced from the electrode assembly 10. Specifically, in the conventional battery cell 1' shown in FIG. 1, when the can lid 40' is inserted into the opening of the cell housing 20', the current collector 30' is pressed by the can lid 40', and the electrode assembly 10' may also be pressed and damaged by the pressed current collector 30'. However, in the battery cell 1 according to the present disclosure, even if the second coupling portion 32 is pressed by the can lid 40, since the second coupling portion 32 is spaced apart from the electrode assembly 10, damage to the electrode assembly 10 caused by the second coupling portion 32 may be minimized.

The second coupling portion 32 may be welded to the can lid 40. A second weld W2 may be formed at each portion where the second coupling portion 32 and the can lid 40 are in surface contact with each other. When the second coupling portion 32 is welded to the can lid 40, improved bonding properties and increased current-carrying area may be expected.

In the battery cell 1 according to the present disclosure, since the second coupling portion 32 of the current collector 30 is separated from the electrode assembly 10, it is possible to minimize damage to the electrode assembly 10 due to the high temperature generated during the welding process between the second coupling portion 32 and the can lid 40. Specifically, in the conventional battery cell 1' shown in FIG. 1, the current collector 30' is very close to or in contact with the electrode assembly 10' or the uncoated portion. As a result, when the can lid 40' and the current collector 30' are penetration-welded, the high-temperature welding heat may be directly transferred to the electrode assembly 10' via the current collector 30', which increases the possibility of damage to the electrode assembly 10', in particular, the separator. However, in the battery cell 1 according to the present disclosure, since the second coupling portion 32 is spaced apart from the electrode assembly 10, the high-temperature welding heat may be prevented from being directly transferred to the electrode assembly 10 via the second coupling portion 32 during the welding process between the can lid 40 and the second coupling portion 32, thereby minimizing damage to the electrode assembly 10 due to the high temperature welding heat.

The second coupling portion 32 may be configured to apply elastic restoring force to the can lid 40 when pressed by the can lid 40. That is, the second coupling portion 32 may play the role of a spring.

For example, when the can lid 40 is inserted into the cell housing 20 and the can lid 40 presses the second coupling portion 32 in the axial direction, the peripheral portion of the second coupling portion 32, which is a part of the current collector 30, may be deformed by the can lid 40. The deformation may be elastic deformation. When the peripheral portion of the second coupling portion 32 is deformed as described above, the second coupling portion 32 may apply an elastic restoring force to the can lid 40 in the opposite direction to the direction in which the can lid 40 presses the second coupling portion 32. For example, when the can lid 40 presses the second coupling portion 32 in the downward or -Z direction, the second coupling portion 32 may apply an elastic restoring force toward the can lid 40 in the upward or +Z direction.

In the above description, the peripheral portion of the second coupling portion 32 may be, for example, the first inclined portion 36 and/or the second inclined portion 37, which will be described later.

Therefore, when the peripheral portion of the second coupling portion 32 is deformed by the can lid 40, the second coupling portion 32 may exert an elastic restoring force on the can lid 40, and as a result, the can lid 40 may be pressed and supported by the second coupling portion 32.

Meanwhile, in order for the can lid 40 to press the second coupling portion 32, a separate device, such as a jig, may press the can lid 40 toward the second coupling portion 32. Alternatively, as described below, when the can lid 40 is force-fitted to the cell housing 20, the second coupling portion 32 may be pressed while the can lid 40 is fixed to the cell housing 20.

The peripheral portion of the second coupling portion 32 may include an elastic material to provide elasticity. For example, the second coupling portion 32 and the current collector 30 may include a metal material.

As described above, when the second coupling portion 32 supports the can lid 40 by applying an elastic restoring force, the can lid 40 and the second coupling portion 32 may come into tight contact with each other, allowing the current collector 30 to stably support the can lid 40.

In the conventional battery cell 1', tolerances among the can lid 40', current collector 30', and electrode assembly 10', as well as tolerances between the current collector 30' and other current collectors 30' and tolerances among other components, could accumulate, which may generate a step between the opening end of the cell housing 20' and the can lid 40' when welding the can lid 40' and the cell housing 20'. Due to this, there is a high possibility of welding defects occurring when welding the can lid 40' and the cell housing 20'. For example, when the can lid 40' is welded to the cell housing 20' in the state where the can lid 40' protrudes further outward from the cell housing 20' than the opening end of the cell housing 20' due to the accumulated tolerances described above, the surface contact area between the can lid 40' and the cell housing 20' may not be sufficiently formed, resulting in insufficient welding strength.

However, in the battery cell 1 according to the present disclosure, since the peripheral portion of the second coupling portion 32 is easily deformed, the tolerances among the respective components of the battery cell 1 may be effectively compensated for. As a result, in the battery cell 1 according to the present disclosure, since the can lid 40 is sufficiently inserted into the cell housing 20 due to the deformation of the peripheral portion of the second coupling portion 32, the electrode assembly 10 may not receive stress, thereby improving the quality of the battery cell 1. In addition, since the contact area between the can lid 40 and the cell housing 20 is maximized, the possibility of welding defects may be significantly reduced during welding the can lid 40 and the cell housing 20.

The can lid 40 may be configured to be inserted into the cell housing 20 through the opening 21. That is, the can lid 40 may be configured such that at least a portion is inserted into the cell housing 20 through the opening 21, instead of resting on the opening 21 side end of the cell housing 20.

For example, both the inner surface of the cell housing 20 and the outer circumferential portion of the can lid 40 may be formed to extend in a direction in which the can lid 40 is inserted into the cell housing 20. For example, referring to FIG. 8, both the inner surface of the cell housing 20 and the outer circumferential portion of the can lid 40 may extend vertically in the axial direction, or in the Z-axis direction.

In this case, when the can lid 40 is inserted into the cell housing 20, the outer circumferential portion of the can lid 40 and the inner surface of the cell housing 20 may come into surface contact with each other. Here, the outer circumferential portion of the can lid 40 that is in contact with the inner surface of the cell housing 20 will be referred to as a second contact portion 43. The second contact portion 43 may have a portion extending parallel to the inner surface of the cell housing 20. For example, in a cross-section, the inner surface of the cell housing 20 may be formed to extend in the Z-axis direction along the second contact portion.

As described above, when the can lid 40 is configured to be inserted into the cell housing 20 through the opening 21, the can lid 40 may be easily inserted into the cell housing 20, thereby easily pressing the second coupling portion 32.

The can lid 40 may be force-fitted to the cell housing 20. For example, before the can lid 40 is inserted into the cell housing 20, the shape of the outer circumferential portion of the can lid 40 may be similar to the shape of the opening 21, but may be formed to be slightly larger than the opening 21. In addition, when the can lid 40 is inserted into the cell housing 20, the shape of the outer circumferential portion of the can lid 40 and the shape of the opening 21 may correspond to each other.

For example, when the opening 21 is circular, before the can lid 40 is inserted into the cell housing 20, the outer circumferential portion of the can lid 40 may be configured in a circular shape that is slightly larger than the opening 21. With this configuration, when the can lid 40 is inserted into the cell housing 20, the outer circumferential portion of the can lid 40 and the opening 21 may have a circular shape of the same size.

The can lid 40 may have an edge 41. The edge 41 may be provided in the outer circumferential portion of the can lid 40. The edge 41 may have an approximate "U"-shaped cross-section in the circumferential direction. In this case, the edge 41 may be easily deformed in the radial direction, thereby facilitating the force-fitting of the can lid 40.

The edge 41 may include the first contact portion 42 and the second contact portion 43 described above. Specifically, the second contact portion 43 may constitute the radially outer portion of the edge 41, and the first contact portion 42 may constitute the lower portion or the -Z-direction side portion of the edge 41.

When the can lid 40 is capable of being force-fitted to the cell housing 20, the can lid 40 may be provisionally coupled to the cell housing 20, and the degree of pressing between the can lid 40 and the second coupling portion 32 may be easily adjusted, thereby improving assembly efficiency.

The second coupling portion 32 may be manufactured by bending a portion of the current collector 30. That is, the second coupling portion 32 may have a bent structure. In addition, the current collector 30 may have an overall plate-like shape, while only the second coupling portion 32 is bent to protrude. The second coupling portion 32 and the current collector 30 may be manufactured to be integrated with each other.

The current collector 30 may be manufactured by cutting and bending a plate-like member so as to have the first coupling portion 31 and the second coupling portion 32. For example, the current collector 30 may be manufactured as a seamless and integrated product by punching and pressing a single metal sheet or plate.

As described above, when the second coupling portion 32 is manufactured by bending a portion of the current collector 30, the second coupling portion 32 may have a bent structure, facilitating deformation of the peripheral portion of the second coupling portion 32. As a result, tolerances among the respective components of the battery cell 1 may be effectively compensated for, thereby improving the quality of the battery cell 1.

In addition, the manufacturing process of the current collector 30 may be simplified, thereby improving the productivity of the current collector 30.

In addition, since the second coupling portion 32 and the current collector 30 may be manufactured integrally, the rigidity and reliability of the current collector 30 may be improved.

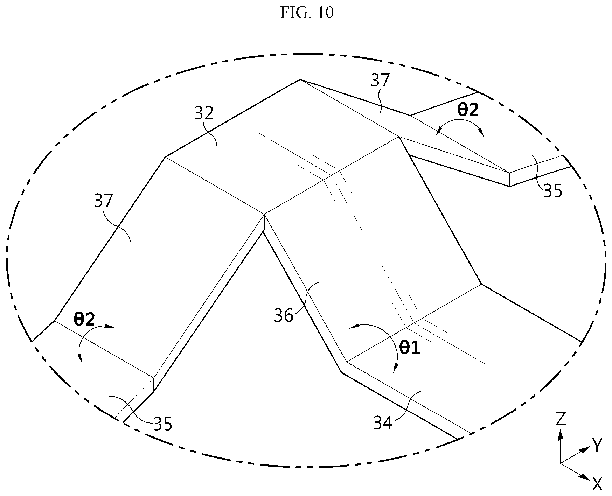

FIG. 10 is an enlarged perspective view of area B in FIG. 6.

Hereinafter, the current collector 30 according to an embodiment of the present disclosure will be described in more detail with further reference to FIG. 10.

The current collector 30 may further include a bridge 34 and a first inclined portion 36. The bridge 34 may connect the first coupling portion 31 and the second coupling portion 32. The first coupling portion 31 and the second coupling portion 32 may be electrically connected by the bridge 34. The bridge 34 may extend radially between the first coupling portion 31 and the second coupling portion 32.

The first inclined portion 36 may be formed to be inclined so as to connect the second coupling portion 32 and the bridge 34. The first inclined portion 36 may be disposed between the second coupling portion 32 and the bridge 34. The circumferential width of the first inclined portion 36 may be formed to be the same as the circumferential width of the bridge 34. Here, the circumferential width may indicate the width in the circumferential direction.

The first inclined portion 36 may extend to be inclined upward from the bridge 34 toward the second coupling portion 32. When viewing the electrode assembly 10 from the can lid 40 side, the angle θ1 between the first inclined portion 36 and the bridge 34 may be an obtuse angle. That is, the angle θ1 between the upper surface of the first inclined portion 36 and the upper surface of the bridge 34 may be an obtuse angle. For example, when the can lid 40 is completely inserted into the cell housing 20, the angle θ1 may be formed to be 120 to 150 degrees (and, before the can lid 40 is inserted into the cell housing 20, the angle θ1 may be formed to be slightly smaller than 120 to 150 degrees).

In the case where the current collector 30 further includes the first inclined portion 36 configured as described above, deformation of the peripheral portion of the second coupling portion 32 becomes easier when the can lid 40 is pressed, so that tolerances among the components of the battery cell 1 may be effectively compensated for, thereby improving the quality of the battery cell 1.

The second coupling portion 32 may be formed integrally with the first inclined portion 36.

The current collector 30 may further include a circumferential portion 35. The circumferential portion 35 may be formed at the edge of the current collector 30 so as to surround at least a portion of the first coupling portion 31. The circumferential portion 35 may be provided, for example, in an overall annular shape along the circumferential direction. The circumferential portion 35 may be disposed between adjacent second coupling portions 32, and in this case, each circumferential portion 35 may be provided in an arc shape. The circumferential portion 35 may have a predetermined width in the radial direction.

In the case where the current collector 30 further includes the circumferential portion 35, the rigidity of the current collector 30 may be enhanced.

The current collector 30 may further include a second inclined portion 37. The second inclined portion 37 may be formed to be inclined so as to connect the second coupling portion 32 and the circumferential portion 35. The second inclined portion 37 may be disposed between the second coupling portion 32 and the circumferential portion 35. When the circumferential portion 35 is disposed on both sides of the second coupling portion 32, the second inclined portion 37 may also be disposed on both sides of the second coupling portion 32. The radial width of the second inclined portion 37 may be formed to be the same as the radial width of the circumferential portion 35.

The second inclined portion 37 may extend to be inclined upward from the circumferential portion 35 toward the second coupling portion 32. When the electrode assembly 10 is viewed from the can lid 40 side, the angle θ2 between the second inclined portion 37 and the circumferential portion 35 may be an obtuse angle. That is, the angle θ2 between the upper surface of the second inclined portion 37 and the upper surface of the circumferential portion 35 may be an obtuse angle. For example, when the can lid 40 is completely inserted into the cell housing 20, the angle θ2 may be formed to be 120 to 150 degrees (and, before the can lid 40 is inserted into the cell housing 20, the angle θ2 may be formed to be slightly smaller than 120 to 150 degrees).

As described above, in the case where the current collector 30 further includes the second inclined portion 37, the peripheral portion of the second coupling portion 32 may be easily deformed under the pressing of the can lid 40, so that tolerances among the components of the battery cell 1 may be effectively compensated for, thereby improving the quality of the battery cell 1.

The second inclined portion 37 and the circumferential portion 35 may be configured to be entirely continuous. Specifically, the second inclined portion 37 and the circumferential portion 35 may be configured to be entirely continuous along the circumferential direction. For example, when viewed in the axial direction or the Z-axis direction, a plurality of second inclined portions 37 and a plurality of circumferential portions 35 may be connected to each other to be entirely continuous along the circumferential direction of the current collector 30.

When the current collector 30 is configured as described above, the rigidity of the current collector 30 may be further secured.

The second coupling portion 32 may further protrude in the axial direction than the first coupling portion 31 due to the second inclined portion 37 and the first inclined portion 36. In this case, the second coupling portion 32 may function as a support on which the can lid 40 may be seated, and the second coupling portion 32 may function as a support with vertical mobility, along with the second inclined portion 37 and the first inclined portion 36, thereby effectively compensating for accumulated tolerances when the can lid 40 and the cell housing 20 are coupled.

The circumferential portion 35 and the first coupling portion 31 may form the same plane (e.g., a plane parallel to the X-Y plane). The second coupling portion 32 may be axially spaced from the first coupling portion 31 to form a plane parallel to the first coupling portion 31. The second coupling portion 32, the first inclined portion 36, and the second inclined portion 37 may form an overall bent structure.

Meanwhile, the radial width of the second coupling portion 32 may be formed to be larger than the radial width of the second inclined portion 37. In this case, the size or area of the second coupling portion 32 may be further increased, thereby increasing the current-carrying area between the second coupling portion 32 and the can lid 40 and improving the current path. In addition, since the size or area of the second coupling portion 32 is increased, the second coupling portion 32 may support the can lid 40 with a wider area, thereby supporting the can lid 40 more stably and firmly.

The second coupling portion 32 may be formed integrally with the second inclined portion 37.

The second coupling portion 32 may be formed integrally with the first inclined portion 36 and the second inclined portion 37.

The current collector 30 may include a plurality of second coupling portions 32. For example, the current collector 30 may include two or more second coupling portions 32. The plurality of second coupling portions 32 may be arranged symmetrically. Specifically, the plurality of second coupling portions 32 may be arranged symmetrically with respect to the center of the current collector 30.

As described above, when the current collector 30 includes a plurality of second coupling portions 32, the second coupling portions 32 may more stably and firmly support the can lid 40. In addition, the current-carrying area between the current collector 30 and the can lid 40 may be increased, thereby further improving the current path between the current collector 30 and the can lid 40 and thus further enhancing electrical stability.

The current collector 30 may include three second coupling portions 32.

As described above, in the case where the current collector 30 includes three second coupling portions 32, the three second coupling portions 32 may form a single plane, allowing the can lid 40 to be in close contact with each of the three second coupling portions 32. Accordingly, the deviation of the tolerances formed between the can lid 40 and each second coupling portion 32 may be minimized, allowing the can lid 40 to be more stably and firmly supported on the current collector 30. As a result, the possibility of welding defects occurring during the welding of the can lid 40 and the current collector 30 may be significantly reduced.

The three second coupling portions 32 may be arranged symmetrically. Specifically, the three second coupling portions 32 may be arranged symmetrically with respect to the center of the current collector 30. For example, when viewed in the axial direction, the three second coupling portions 32 may form the respective vertices of an equilateral triangle.

In particular, referring to FIGS. 8 and 9, the current collector 30 may not be in contact with the cell housing 20. Specifically, the current collector 30 may not be in contact with the inner surface of the cell housing 20. A predetermined gap may be formed in the radial direction between the outer circumferential portion 35 of the current collector 30 and the inner surface of the cell housing 20. In this case, the current collector 30 may not be directly coupled to the cell housing 20. The current collector 30 may be coupled to and electrically connected with the can lid 40, and the can lid 40 may be coupled to and electrically connected with the cell housing 20. As a result, the current collector 30 may be indirectly electrically connected to the cell housing 20.

As described above, when the current collector 30 does not come into contact with the cell housing 20, deformation of the current collector 30 may be further facilitated. In particular, since the second coupling portion 32 may easily move toward the cell housing 20, the gap between the second coupling portion 32 and the electrode assembly 10 may be more easily changed. Accordingly, tolerances among the respective components of the battery cell 1 may be more effectively compensated for, thereby further improving the quality of the battery cell 1.

In addition, since the possibility of interference between the current collector 30 and the cell housing 20 is significantly reduced, there is no need to precisely adjust the concentricity between the center of the current collector 30 (particularly, the first coupling portion 31) and the center of the electrode assembly 10 during the assembly process of the battery cell 1, thereby improving the assembly efficiency and productivity of the battery cell 1.

The can lid 40 may be welded to the cell housing 20. Specifically, when the can lid 40 is inserted into the opening 21 of the cell housing 20, the can lid 40 and the cell housing 20 come into contact with each other, and a third weld W3 may be formed at the contact point between the can lid 40 and the cell housing 20. For example, the outer circumferential surface of the can lid 40 may be in surface contact with the inner surface of the cell housing 20, and in this state, a third weld W3 may be formed between the outer circumferential surface of the can lid 40 and the inner surface of the cell housing 20.

When the can lid 40 is welded to the cell housing 20, improved bonding properties and an increased current-carrying area may be expected.

In addition, in the existing battery cell 1, the cell housing 20 may include a beading portion and a crimping portion in a recessed shape. In the existing battery cell 1, the electrode assembly 10 and the current collector 30 may be fixed by the beading portion and the crimping portion. However, the battery cell 1 according to the present disclosure may exclude the beading portion and the crimping portion included in the existing battery cell 1. In the battery cell 1 according to the present disclosure, the electrode assembly 10 and the current collector 30 may be firmly and stably fixed without including components corresponding to the beading portion and crimping portion of the existing battery cell 1. In addition, the battery cell 1 according to the present disclosure may increase the internal space of the cell housing 20 occupied by the electrode assembly 10, thereby improving energy density.

Referring back to FIGS. 5 and 6, the can lid 40 may have an injection hole 46, and the current collector 30 may have a hole.

The injection hole 46 may be provided by perforating the can lid 40, leading to the electrode assembly 10. The electrolyte may be easily injected into the electrode assembly 10 through the injection hole 46. A hole H may be formed in the current collector 30. The hole H may be in communication with the electrode assembly 10. The hole may be in communication with the core of the electrode assembly 10. This may be understood as a winding center hole C having an empty space formed therein. The electrolyte injected through the injection hole 46 may flow into the electrode assembly 10 through the hole H. The hole H may be formed at a position corresponding to the injection hole 46. A plug 47 may be coupled to the injection hole 46. After the electrolyte is injected through the injection hole 46, the plug 47 may be coupled to the injection hole 46, thereby sealing the injection hole 46. Various structures may be applied to the injection hole 46 and the plug 47.

Referring back to FIGS. 8 and 9, the can lid 40 of the battery cell 1 according to the present disclosure may include a vent portion 44. The vent portion 44 may be ruptured and at least partially separated from the battery cell 1 when the internal pressure of the battery cell 1 exceeds a preset reference value due to high-temperature venting gas generated by a thermal event in the battery cell 1. When the vent portion 44 is opened, high-temperature venting gas, flames, or solid discharges inside the battery cell 1 may be discharged to the outside through the open vent portion 44. The vent portion 44 may be formed by notching at least one of both axial sides of the can lid 40, and this notched portion will be referred to as a vent notch 45. The vent notch 45 may be formed by notching an inward portion of the can lid 40 in the circumferential direction.

Referring back to FIGS. 3 and 4, the battery 1 according to the present disclosure will be described in more detail.

As described above, the cell housing 20 may include a closed portion 22. The closed portion 22 may be formed on the other side or lower side (-Z direction side) of the cell housing 20. The closed portion 22 may be configured to be closed. A terminal 50 may be disposed in the closed portion 22. The terminal 50 may be configured to penetrate the closed portion 22 so that at least a portion thereof is exposed to the outside. The terminal 50 may be provided in a rivet form. The terminal 50 may be electrically connected to the second electrode 11b and may have the second polarity. The terminal 50 may be coupled to the second current collector 30b by welding or the like. The terminal 50 may be configured as a positive electrode terminal 50.

The closed portion 22 may have the first polarity. As described above, the cell housing 20 may be electrically connected to the first electrode 11a, and may have the first polarity. An insulating gasket may be disposed between the closure 22 and the terminal 50 for insulation.

An insulator may be disposed between the closed portion 22 and the second current collector 30b to insulate them from each other. The insulator may also be configured to insulate the electrode 11 assembly and the cell housing 20 from each other.

The above embodiments have described preferred examples of the battery 1 according to the present disclosure. The technical concept of the present disclosure is not limited thereto, and may include a combination of any two or more of them.

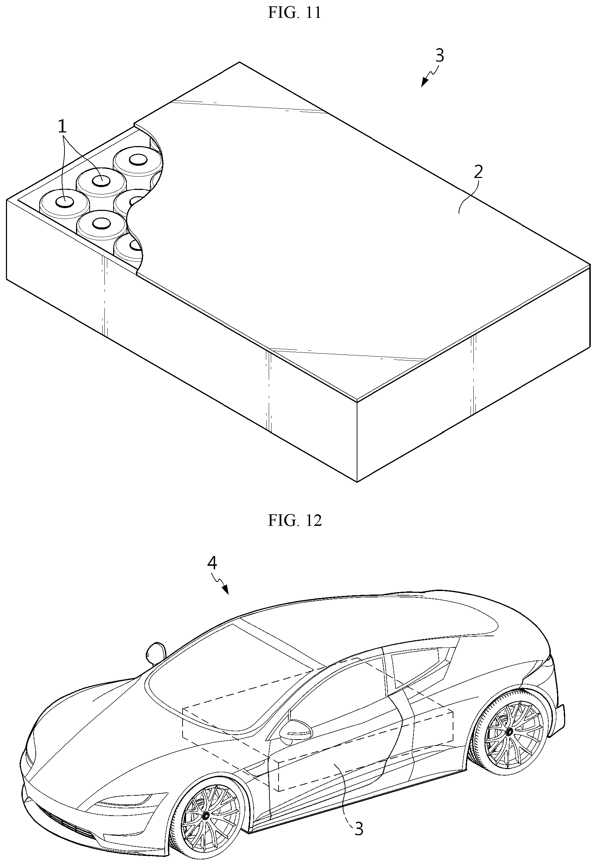

FIG. 11 is a drawing illustrating a battery pack according to an embodiment of the present disclosure.

Referring to FIG. 11, a battery pack 3 according to the present disclosure may include at least one battery 1 according to the present disclosure. The battery pack 3 may include a pack case 2 that accommodates at least one battery 1.

Components such as a busbar for electrical connection between the batteries 1, a cooling unit, an external terminal, and the like have been omitted from the drawings for convenience of illustration. The structure of the plurality of batteries 1 for manufacturing the battery pack 3 has been previously described by way of example.

FIG. 12 is a drawing illustrating a vehicle according to an embodiment of the present disclosure.

Referring to FIG. 12, a battery pack 3 according to an embodiment of the present disclosure may be applied to a vehicle 4, such as an electric vehicle or a hybrid vehicle. That is, the vehicle 4 according to the present disclosure may include the battery pack 3 according to the present disclosure. The battery pack 3 may be installed in the body frame under the vehicle seat or in the trunk space. In addition to the battery pack 3, the vehicle 4 according to the present disclosure may further include various other components included in the vehicle 4. For example, the vehicle 4 according to an embodiment of the present disclosure may include, in addition to the battery pack 3 according to the present disclosure, a car body, a motor, a control device such as an ECU (electronic control unit), and the like.

In addition, the battery pack 3 according to the present disclosure may also be installed in other devices, apparatus, or equipment, such as an energy storage system (ESS) that utilizes secondary batteries, in addition to the vehicle 4.

Meanwhile, although terms indicating directions such as up(ward) and down(ward) directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### [Description of Reference numerals]

1: Battery cell
2: Pack case
3: Battery pack
4: Vehicle
10: Electrode assembly
11: Electrode
11a: First electrode
11b: Second electrode
12: Separator
13: Uncoated portion
13a: First uncoated portion
13b: Second uncoated portion
20: Cell housing
21: Opening
22: Closed portion
30: Current collector
30a: First current collector
30b: Second current collector
31: First coupling portion
32: Second coupling portion
33: Extended portion
34: Bridge
35: Circumferential portion
36: First inclined portion
37: Second inclined portion
40: Can lid
41: Edge
42: First contact portion
43: Second contact portion
44: Vent portion
45: Vent notch
46: Injection hole
47: Plug
50: Terminal
C: Winding center hole
A: Central axis
H: Hole
W1: First weld
W2: Second weld
W3: Third weld

## Claims

1. A battery cell comprising:
an electrode assembly configured by winding a first electrode and a second electrode with a separator interposed therebetween around a central axis of a winding center hole;
a cell housing configured to accommodate the electrode assembly therein and having an opening formed on one side;
a can lid configured to cover the opening; and
a current collector comprising a first coupling portion coupled to the electrode assembly and a second coupling portion coupled to the can lid,
wherein the second coupling portion is spaced apart from the electrode assembly.

2. The battery cell of claim 1,
wherein the second coupling portion
is welded to the can lid.

3. The battery cell of claim 1,
wherein the second coupling portion
is configured to exert an elastic restoring force on the can lid when pressed by the can lid.

4. The battery cell of claim 1,
wherein the can lid
is configured to be inserted into the cell housing through the opening.

5. The battery cell of claim 1,
wherein the can lid
is force-fitted to the cell housing.

6. The battery cell of claim 1,
wherein the second coupling portion
is manufactured by bending a portion of the current collector.

7. The battery cell of claim 1,
wherein the current collector further comprises:
a bridge configured to connect the first coupling portion and the second coupling portion; and
a first inclined portion formed to be inclined so as to connect the second coupling portion and the bridge.

8. The battery cell of claim 7,
wherein an angle between the first inclined portion and the bridge is formed as an obtuse angle.

9. The battery cell of claim 1,
wherein the current collector further comprises
a circumferential portion formed at an edge to surround at least a portion of the first coupling portion.

10. The battery cell of claim 9,
wherein the current collector further comprises
a second inclined portion formed to be inclined so as to connect the second coupling portion and the circumferential portion.

11. The battery cell of claim 10,
wherein the second inclined portion and the circumferential portion are configured to be entirely continuous along a circumferential direction.

12. The battery cell of claim 10,
wherein an angle between the second inclined portion and the circumferential portion is formed as an obtuse angle.

13. The battery cell of claim 1,
wherein the current collector
is configured not to be in contact with the cell housing.

14. The battery cell of claim 1,
wherein the current collector comprises
a plurality of second coupling portions.

15. The battery cell of claim 14,
wherein the current collector comprises
three second coupling portions.

16. The battery cell of claim 1,
wherein the can lid
is welded to the cell housing.

17. A battery pack comprising at least one battery cell according to any one of claims 1 to 16.

18. A vehicle comprising at least one battery pack according to claim 17.
